# EUROPÄISCHE PATENTSCHRIFT

(11) **EP 1 124 034 B1**
(45) Veröffentlichungstag und Bekanntmachung des Hinweises auf die Patenterteilung: **20.02.2008**
(21) Anmeldenummer: 00124481.3
(22) Anmeldetag: 09.11.2000
(51) Int. Cl.: E05F 15/00, H01H 3/14

(54) **Sicherheitsleiste für eine Schliesskanten-Sicherung**
Safety edge for a closure-edge security
Bordure de sécurité pour dispositif de sécurité d'un bord de fermeture

(30) Priorität: 12.02.2000 DE 20002561 U
(43) Veröffentlichungstag der Anmeldung: 16.08.2001
(73) Patentinhaber: Haake, André, 48703 Stadtlohn (DE); Haake, Oliver, 46354 Südlohn (DE); Haake, Patrick, 48691 Vreden (DE)
(72) Erfinder: Haake, André, 48703 Stadtlohn (DE); Haake, Oliver, 46354 Südlohn (DE); Haake, Patrick, 48691 Vreden (DE)
(74) Vertreter: Habbel, Hans-Georg

(56) Entgegenhaltungen:
- EP-A- 0 103 726

## Beschreibung

Die Erfindung bezieht sich auf eine Sicherheitsleiste für eine Schließkanten-Sicherung gemäß dem Oberbegriff des Hauptanspruches.

Eine gattungsbildende Einrichtung ist beispielsweise aus der EP 103 726 bekannt. Bei dieser bekannten Anordnung liegt die Kontaktleitung zentrisch im Kontaktelement, so daß sie mit gleicher Empfindlichkeit auf einen auf sie einwirkenden Druck reagiert, unabhängig von welcher Seite dieser Druck über den Umfang gesehen kommt.

Da Sicherheitsleisten für Schaltleisten aber immer gezielt eingebaut werden, ist also bekannt, von welcher Seite der Schaltleiste der mögliche Druck auf die Sicherheitsleiste einwirkt.

Der Erfindung liegt die Aufgabe zugrunde, die Empfindlichkeit einer Schaltleiste zu erhöhen, so daß sie bei geringster Druckbeanspruchung bereits den Strom unterbrechend reagiert.

Diese der Erfindung zugrundeliegende Aufgabe wird durch die Lehre des Hauptanspruches gelöst.

In vorteilhafter Weise kann gemäß der Erfindung die Vorspannung auf die Kontaktelemente entweder durch das elastische Aufnahmemedium, z. B. einen Schlauch selbst oder z. B. durch ein in dem elastischen Schlauch ausgearbeitetes Kontaktelementenbett oder aber durch eine Expanderschnur oder Draht-Federanordnung erzeugt werden.

Mit anderen Worten ausgedrückt wird vorgeschlagen, daß die eigentliche Kontaktleitung in dem Kontaktelement exzentrisch, d. h. also einseitig angeordnet wird, so daß bereits bei einer kleinen Kippbewegung der Kontaktelemente gegeneinander die Kontaktleitung unterbrochen wird.

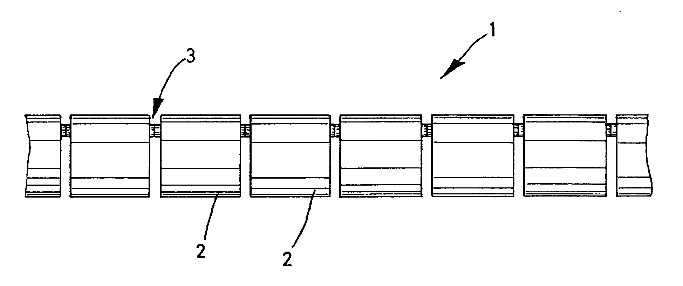

Als Beispiel zeigt die Zeichnung eine Sicherheitsleiste 1, die aus Kontaktelementen 2 aufgebaut ist, wobei innerhalb der Kontaktelemente eine Kontaktleitung 3 vorgesehen ist. Die Kontaktleitung 3 schafft zwischen den einzelnen Kontaktelementen 2 Kontaktstellen, die bei einer Kippbewegung der Kontaktelemente unterbrochen werden, so daß dadurch die Sicherheitsschaltung ausgelöst wird. Das Aufnahmemedium, z. B. ein Schlauch, in dem die Kontaktelemente 2 angeordnet sind, ist aus Übersichtlichkeitsgründen nicht dargestellt.

## Patentansprüche

1. Sicherheitsleiste für eine Schließkanten-Sicherung als Schaltleiste mit einer elektrischen Schalteinrichtung, wobei die Sicherheitsleiste (1) aus einer Vielzahl von Kontaktelementen (2) besteht, die in einem Aufnahmemedium aneinandergereiht angeordnet sind, und die Kontaktelemente in Ruhestellung an stirnseitig vorgesehenen Kontaktstellen einer Kontaktleitung (3) aneinander anliegen und unter der Einwirkung einer äußeren Kraft bei örtlicher Verformung des Aufnahmemediums den Kontakt unterbrechend auseinanderbewegt werden, **dadurch gekennzeichnet, daß** die Kontaktleitung (3) exzentrisch in den Kontaktelementen (2) angeordnet ist.

2. Sicherheitsleiste nach Anspruch 1, **dadurch gekennzeichnet, daß** die Kontaktelemente (2) in Ruhestellung unter der Einwirkung einer elastischen Vorspannung durch eine Expanderschnur oder Draht-Federanordnung stehen.

## Claims

1. Safety edge for a closure-edge security in the form of a switch block with an electrical switching device, where the safety edge (1) consists of a number of contact elements (2) which are arranged adjacent to one another in a holding medium, and the contact elements, in their inoperative position, lie against one another on contact points provided at the front side of a contact conductor (3), and, when subjected to an outside force and local deformation of the holding medium, are moved apart, thereby breaking the contact, **characterised in that** the contact conductor (3) is arranged eccentrically in the contact elements (2).

2. Safety edge according to claim 1, **characterised in that** the contact elements (2), in their inoperative position, are subjected to elastic pretension created by an expander cord or wire-spring arrangement.

## Revendications

1. Bande de sécurité pour une protection de bord de fermeture formant une bande de contact avec un dispositif de contact électrique, laquelle bande de sécurité (1) se compose d'une pluralité d'éléments de contact (2) disposés les uns à la suite des autres dans une matière d'inclusion, et les éléments de contact reposent les uns contre les autres dans la position de repos à des points de contact d'une ligne de contact (3) prévus sur des faces d'extrémité et sont écartés sous l'action d'une force extérieure, avec déformation locale de la matière d'inclusion, en interrompant le contact, **caractérisée en ce que** la ligne de contact (3) est disposée de façon excentrée dans les éléments de contact (2).

2. Bande de sécurité selon la revendication 1, **caractérisée en ce que** les éléments de contact (2) se trouvent, dans la position de repos, sous l'action d'une précontrainte élastique exercée par un cordon extensible ou une disposition de ressort à boudin.
